# EUROPEAN PATENT SPECIFICATION

(11) **EP 1 266 846 B1**
(45) Date of publication and mention of the grant of the patent: **03.08.2005**
(21) Application number: 02405384.5
(22) Date of filing: 10.05.2002
(51) Int. Cl.: B65G 17/06, B65G 17/08

(54) **Radius conveyor belt with structure for the prevention of pinched fingers**
Kurvengurtförderer mit einem Einklemmschutz für Finger
Transporteur à bande courbée avec structure destiné à empêcher le coincement des doigts

(30) Priority: 05.06.2001 US 874589
(43) Date of publication of application: 18.12.2002
(73) Proprietor: Habasit AG, 4153 Reinach (CH)
(72) Inventor: Guldenfels, Dieter, 4148 Pfeffingen (CH)
(74) Representative: Bollhalder, Renato

(56) References cited:
- US-A- 5 372 248
- US-A- 5 921 379
- US-B1- 6 213 292

## Description

### FIELD OF INVENTION

The present invention relates to conveyor belts and, more particularly, to modular plastic conveyor belts formed of rows of plastic belt modules pivotally interlinked by transverse pivot rods.

### BACKGROUND OF THE INVENTION

Because they do not corrode, are light weight, and are easy to clean, unlike metal conveyor belts, plastic conveyor belts are used widely, especially in conveying food products. Modular plastic conveyor belts are made up of molded plastic modular links, or belt modules, that can be arranged side by side in rows of selectable width. A series of spaced apart link ends extending from each side of the modules include aligned apertures to accommodate a pivot rod. The link ends along one end of a row of modules are interconnected with the link ends of an adjacent row. A pivot rod journaled in the aligned apertures of the side-by-side and end-to-end connected modules forms a hinge between adjacent rows. Rows of belt modules are connected together to form an endless conveyor belt capable of articulating about a drive sprocket.

In many industrial applications, conveyor belts are used to carry products along paths including curved segments. Belts capable of flexing sidewise to follow curved paths are referred to as side-flexing, turn, or radius belts. As a radius belt negotiates a turn, the belt must be able to fan out because the edge of the belt at the outside of the turn follows a longer path than the edge at the inside of the turn. In order to fan out, a modular plastic radius belt typically has provisions that allow it to collapse at the inside of a turn or to spread out at the outside of the turn.

Apertures slotted in the direction of travel of the belt are commonly provided in the link ends on at least one side of the modules to facilitate the collapsing and spreading of the belt.

Such radius conveyor belts comprising a corrugated cross-rib disposed between the series of link ends extending from each side of the modules are described in US-A-5 372 248. US-A-5 372 248 discloses radius conveyor belts and conveying systems according to the preambles of independent claims 1 and 8, respectively.

In applications where greater strength is required radius belts with a larger pitch are required. These radius belts with a large pitch (≥ 1.5" = 38.1 mm) have suffered from the disadvantage that, due to the larger pitch and the need to be collapsible, the grid openings were large enough to allow the finger of operators to penetrate the grid. This situation may lead to injuries.

What is needed is a modular radius conveyor belt that has a large pitch yet reduces the gap between the links to less than 10 mm to prevent fingers from penetrating the grid.

### SUMMARY OF THE INVENTION

This object is achieved by the radius conveyor belt according to independent claim 1 and the conveying system according to independent claim 8. Preferred embodiments are defined in the dependent claims.

The present invention meets the above-described need by providing a radius belt having belt modules with a cross-rib designed so as to allow the link ends to undercut the cross-rib when collapsing. The module has a cross-rib with an extended portion in the longitudinal direction. The modules include first and second module surfaces, i.e., a top, product-conveying surface and a bottom, sprocket-driven surface. A cross-rib extends across the width of each module transverse to the direction of belt travel. The cross-rib is formed in part by a web and in part by a thin, corrugated strip having a pair of essentially parallel walls. The corrugated strip forms a series of regularly spaced alternating ridges and valleys along each wall. Link ends extend outward from the ridges on each wall of the corrugated strip. Each link end has a leg portion attached at a ridge of the strip and a thick distal portion at the end of the link end distant from the corrugated strip. Transverse holes in the link ends extending from respective walls of a module are aligned to accommodate a pivot rod. When the link ends of consecutive rows of side-by-side modules are intercalated, the pivot rod serves as a hinge pin in a hinged joint between consecutive interlinked rows. To permit the belt to follow a curved path, the pivot rod openings in at least one of the link ends extending from one of the walls of the corrugated strip are slotted longitudinally in the direction of belt travel.

According to the invention, the radius conveyor belt has a pitch of ≥ 38.1 mm and the web on the cross-rib is a stiffening web extending in the direction of belt travel with a constant width such that, when the belt is at its maximum extension in the direction of belt travel, a space bounded by the web and the sidewalls of second link ends of one belt module and an outer end of a first link end of an adjacent belt module has a diameter less than 10 mm.

The belt is driven by engagement of the sprocket tooth with the curved outside surface of the link ends. The link end engaged by the sprocket tooth is subjected to a compressive force rather than an undesirable tensile force. Thus, the link ends provide pull strength, resistance to belt and sprocket wear, and sprocket drivability. As an alternative, a central portion of a link end disposed in the middle belt modules may also engage with a tooth on the drive sprocket. Because the mid modules do not have to collapse fully, they may be formed with a thicker and fully straight cross-rib.

Each wall of the corrugated strip forms a series of arched recesses with the leg portions of the link ends. The recesses are large enough to provide room for a thick link end of an interlinked module of an adjacent row to collapse into the recess or to rotate as belt rows fan out going around a turn. Because the recesses along one wall overlap in a transverse direction with the recesses along the other wall, additional space for collapsing is provided.

### BRIEF DESCRIPTION OF THE DRAWINGS

The invention is illustrated in the drawings in which like reference characters designate the same or similar parts throughout the figures of which:
Fig. 1 is a top plan view of a radius conveyor belt module of the present invention;
Fig. 2 is a bottom plan view of the belt module of Fig. 1;
Fig. 3 is an end elevation view of the belt module of Fig. 1;
Fig. 4 is an end elevation view of the belt module of Fig. 1;
Fig. 5 is a top perspective view of the belt module of Fig. 1;
Fig. 6 is a bottom perspective view of the belt module of Fig. 1;
Fig. 7 is a top plan view of a radius belt of the present invention;
Fig. 8 is a partial detailed view of a section of the belt of Fig. 7;
Fig. 9 is a side elevational view of the belt of Fig. 7 engaged with a sprocket and illustrating the gaps between adjacent modules.

### DETAILED DESCRIPTION OF THE PREFERRED EMBODIMENT

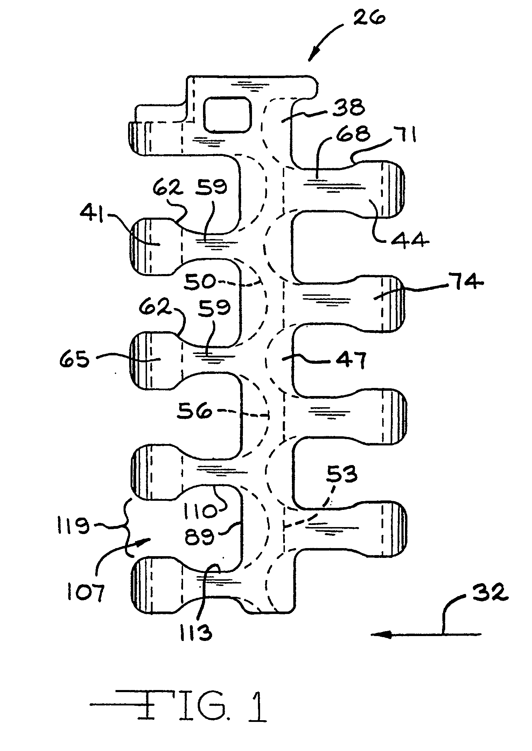

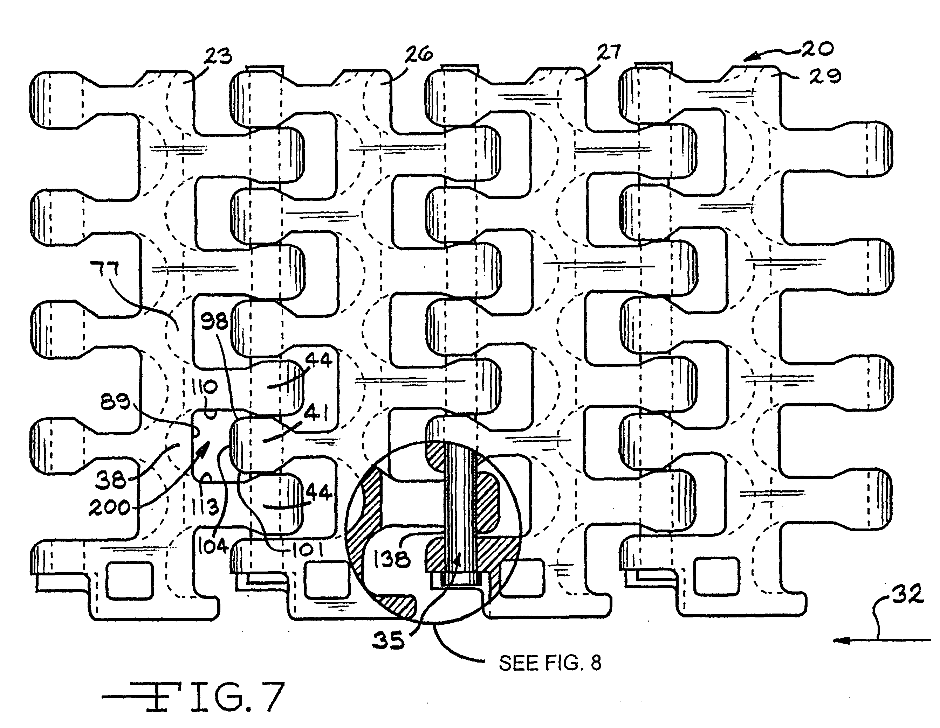

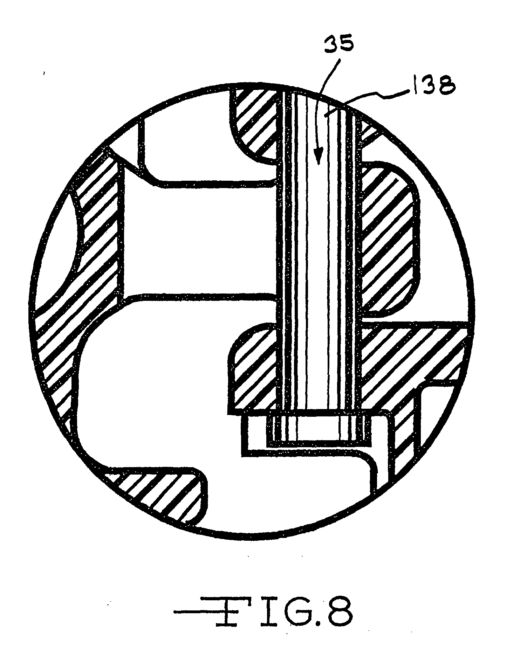

Referring now to the drawings, Figs. 1 to 9 show a preferred embodiment of a modular belt 20 of the present invention. The portion of the modular belt 20 shown is formed from molded plastic modules 23, 26, 27 and 29 (Fig. 7). For reference, the direction of belt travel is indicated by arrow 32, however, the belt of the present invention may be conveyed in either direction. A pivot rod 35 (Fig. 7) connects adjacent belt modules by passing through openings in the modules disposed transverse to the direction of belt travel.

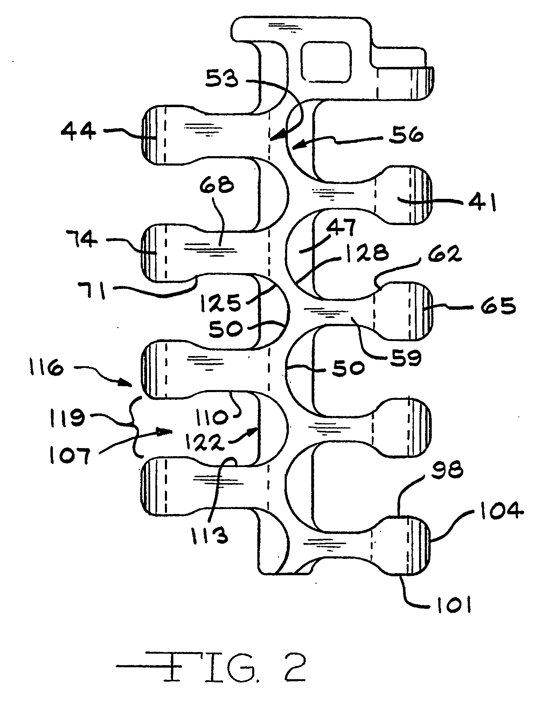

As shown in Fig. 1, an exemplary one of the belt module 26 has a cross-rib 38 supporting a plurality of first link ends 41 and a plurality of second link ends 44. The first link ends 41 are disposed in the direction of belt travel indicated by arrow 32 and the plurality of second link ends 44 extend opposite the first link ends 41. As will be described in detail hereinafter, the cross-rib 38 is comprised of an upper, transverse stiffening web 47 forming into a lower corrugated portion 50 (shown in broken lines in Fig. 1). The corrugated portion 50 forms a series of ridges 53 and valleys 56 in a sinusoidal manner. Along with the transverse web 47 of the cross-rib 38, the ridges 53 extending toward the right of Fig. 2 support the first link ends 41 while the ridges 53 extending toward the left in the drawing support the second link ends 44.

The first link ends 41 include a leg portion 59 connected through an angled portion 62 to a distal head portion 65. In a similar manner, the second link ends 44 include a leg portion 68 connected through an angled portion 71 to a distal head portion 74.

With respect to the orientation shown in Fig. 3, the cross-rib 38, which is formed of the stiffening web 47 and the corrugated portion 50 (Fig. 2), is comprised of an upper surface 77 extending to and meeting with opposed left and right walls 80 and 83 which, in turn, meet with a lower surface 86 of the module. The left wall 80 is comprised of an upper wall 89, which is part of the stiffening web 47, and extends downwardly to a curved wall 92 which forms into a lower vertical wall 95. The curved wall 92 and the lower vertical wall 95 are part of the corrugated portion 50 of the cross-rib 38. The lower vertical wall 95 extends to the lower surface 86 of the module which, in turn, extends to and meets with the right vertical wall 83.

As shown in Fig. 2, the head portion 65 is preferably larger than the leg portion 59. Accordingly, the head portion 65 is connected to the leg portion 59 by the angled portion 62. The head portion 65 is preferably formed with two substantially parallel sides 98 and 101 connected by an outer end 104. The corners between the sides 98, 101 and ends 104 are preferably radiused to be smooth and to protect the conveyed product from damage.

An opening 107 is defined between spaced apart sides 110, 113 of adjacent link ends. At a distal end 116, the ends of adjacent links form the mouth 119 of the opening 107. At the opposite end 122, the opening 107 terminates in the multi-level surface defined by the web 47 and corrugated portion 50 as described above. The top level of the surface (best shown in Fig. 1) is defined by wall 89 (Fig. 3) of the web 47. The corners where the side walls of the link ends 41 meet the straight wall 89 of web 47, are also radiused to be smooth and to protect the conveyed product from damage.

In Fig. 2, the bottom level of the surface of cross-rib 38 is defined by the relatively thin corrugated portion 50 having a pair of essentially parallel walls 125, 128. The corrugated portion 50 forms the series of regularly spaced alternating ridges 53 and valleys 56 along the cross-rib 38 as described herein.

Returning to Fig. 1, the straight wall 89 is shown bordering the opening 107. The curved surface defined by corrugated portion 50 is shown in broken lines. The curved surface receives link ends from an adjacent belt module such that the belt 20 is capable of collapsing for movement around a curved path as described in detail herein.

The plurality of second link ends 44 extend from the belt module 26 in the opposite direction from the first link ends 41. The second link ends 44 have the same overall shape as the first link ends 41 and are designed to fit into the openings between the first link ends 41 such that adjacent belt modules can be intercalated and pivotally connected by the pivot rods 35.

As shown in Fig. 3, the belt module 26 includes a slot 134 that is disposed through the link ends 41 transverse to the direction of belt travel. The slot 134 extends in the direction of belt travel such that it is generally oblong. The slot 134 receives the pivot rod 35. The pivot rod 35 passes through the slots 134 in the first link ends 41 and through the openings 137 in the second link ends 44 (as shown in Fig. 7). The openings 137 correspond to the shape of the shaft 138 (Fig. 7) of the pivot rod 35 such that the pivot rod 35 is received through the opening 137 but in contrast to slot 134, the pivot rod 35 preferably cannot move in the direction of belt travel inside opening 137. Due to the oblong shape of slot 134, the pivot rod 35 can pivot inside the slot 134 such that the belt 20 is capable of collapsing on one side while the other side fans out due to the pivoting of rod 35 and the nesting of the link ends 41, 44 and cooperating spaces in the adjacent belt modules.

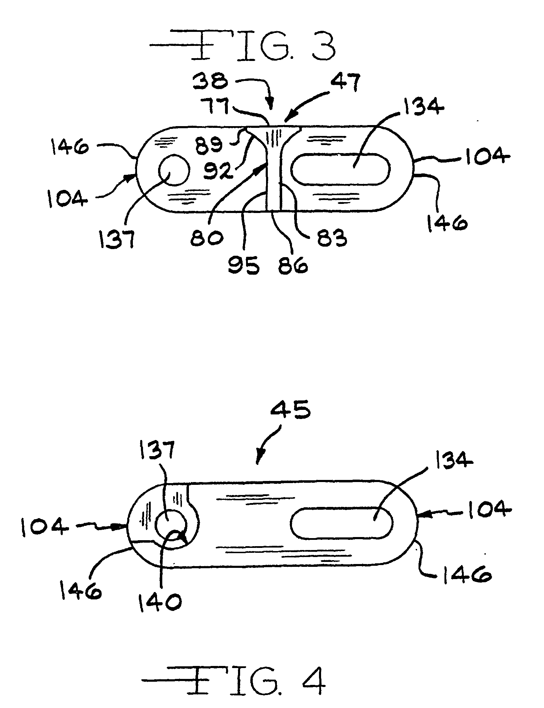

In Fig. 4, the last link end 45 of the belt module 26 includes a second opening 140 disposed around opening 137 to provide for countersinking a head (not shown) at the end of the pivot rod shaft 138.

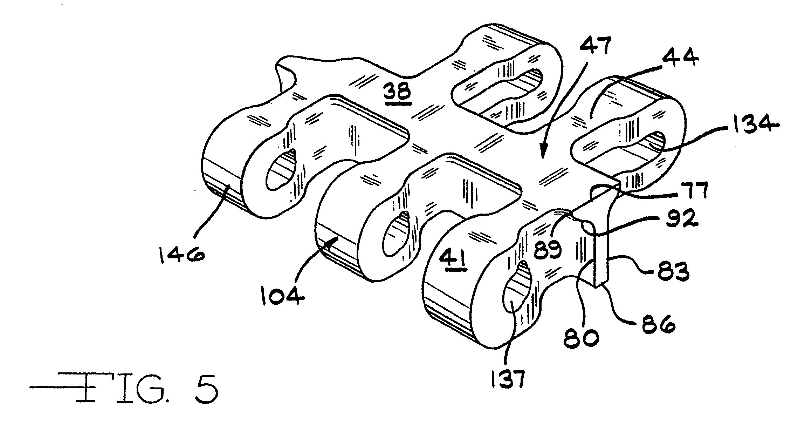

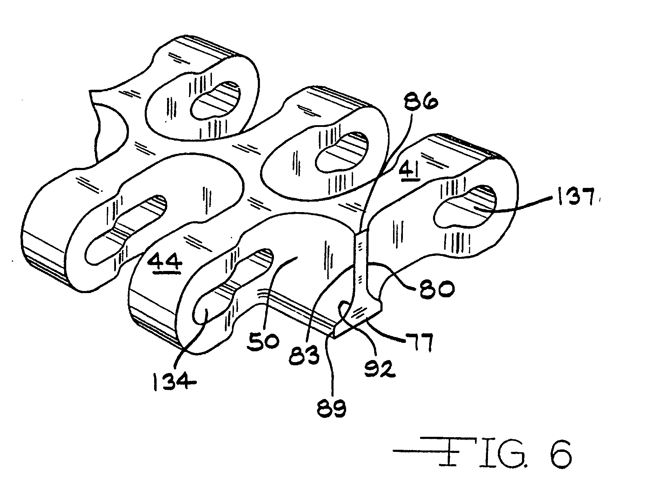

The transverse slot 134 in link ends 41 and the transverse opening 137 in link ends 44 receive pivot rods 35 to connect adjacent belt modules 23 and 26 as shown in Fig. 7. As shown in Fig. 5, the web 47 is coterminous with the top surface 77 of the belt module 26 and terminates at the top of the corrugated portion 50 that defines the space between adjacent link ends (best shown in Fig. 6).

The outer ends 104 of the link ends 41 and 44 are radiused in a smooth rounded surface 146. The rounded surface 146 preferably comprises a rounded surface having a constant radius and provides a driving surface for engagement with the drive sprocket 149 as described herein.

Also, the curvature of the outer ends 104 of the link ends enables the links to clear the web 47 when the adjacent modules collapse along the edge. The clearance enables the link ends to extend under the web 47 into the space defined by the corrugated portion 50 (best shown in Figs. 5-6). In this manner, the web 47 partially hoods the link ends when the belt 20 collapses. Accordingly, the belt module 26 provides a web 47 for structural stability while maintaining a corrugated portion 50 to allow for recesses that provide maximum space for collapsing the belt modules around a curved path.

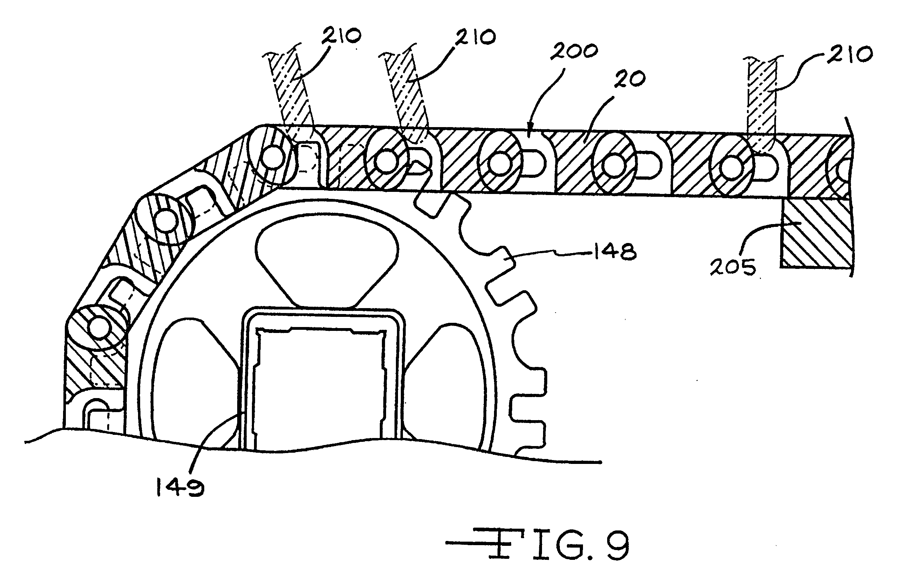

In Fig. 7, the belt 20 is shown at its maximum lengthwise extension. For example, the maximum lengthwise extension creates spaces 200 bordered by the cross-rib 38, the link ends 44 of module 23 and the link ends 41 of the adjacent module. In order to prevent small fingers from penetrating the belt grid and engaging with a belt support 205 (Fig. 9), the top surface 77 of the cross-rib is extended such that the opening 200 described above is less than 10 mm. At the top conveying surface, the opening 200 is bordered on one side by upper wall 89. The space 200 is also bordered by sides 110, 113, of adjacent link ends 44. The end of space 200 opposite from upper wall 89 is defined by the outer end 104 of link end 41 on the adjacent belt module 26. Also, a portion of the sides 98 and 101 of link end 41 border space 200.

For belts having a pitch greater than or equal to 1.5 inches = 38.1 mm, the openings created in the belt grid may allow for fingers to penetrate the grid.

In the present invention, for belts having pitches greater than or equal to 1.5 inches = 38.1 mm, extending the upper wall 89 outward from the cross-rib 38 reduces the size of space 200. The upper wall 89 is sized so that when the belt 20 is fully extended lengthwise the space 200 has critical opening widths or diameter less than 10 mm. Critical opening width or diameter is defined as the distance of the opening across its smallest dimension.

The extended upper wall 89 is sized to reduce the size of the opening yet allows the belt 20 to collapse without obstruction. The curvature of the link end from the top surface provides for nesting of the link end beneath the upper wall 89.

In Fig. 9, the belt modules 20 are shown driven by the teeth 148 on the drive sprocket 149. The drive sprocket 149 is driven by a rotating shaft (not shown) as known to those of ordinary skill in the art. A cylindrical member 210, which is representative of a small finger, has a diameter of 10 mm. As shown, the space 200 is not large enough to accommodate the member 210.

Accordingly, a radius belt 20 suitable for larger pitch (≥ 1.5" = 38.1 mm) radius belt applications has been disclosed. The belt 20 has an extended cross-rib 38 that reduces the space 200 to less than 10 mm width so as to prevent fingers of a user from penetrating the belt grid.

While the invention has been described in connection with a preferred embodiment, it is not intended to limit the scope of the invention to the particular form set forth, but, on the contrary, it is intended to cover such alternatives,
modifications, and equivalents as may be included within the scope of the invention as defined by the appended claims.

## Claims

1. Radius conveyor belt (20), comprising:
a plurality of belt modules (23, 26, 27, 29) having a plurality of first link ends (41) disposed in the direction of belt travel and having a plurality of second link ends (44) disposed in the opposite direction, a cross-rib (38) disposed between the first and second link ends (41, 44) and having a corrugated portion (50), the first and second link ends (41, 44) disposed such that a space (107) capable of receiving a link end (41, 44) is formed between adjacent link ends (41, 44), the space (107) being open at one end and terminating in a rounded region at the opposite end, the plurality of first link ends (41) being offset from the plurality of second link ends (44) such that the first link ends (41) align with the spaces (107) between the second link ends (44) such that adjacently positioned belt modules (23, 26, 27, 29) are capable of intercalating so that the first link ends (41) of one belt module (23, 26, 27, 29) fit into the spaces (107) defined between the second link ends (44) of an adjacent belt module (23, 26, 27, 29), the plurality of first link ends (41) having a slot (134) defined therein, the slot (134) disposed transverse to the direction of belt travel and extending in the direction of belt travel, the plurality of second link ends (44) having a transverse opening (137) defined therein;
a pivot rod (35) extending transverse to the direction of belt travel through the openings (137) in the second link ends (44) of one of the plurality of belt modules (23, 26, 27, 29) and extending through the slotted openings (134) in the first link ends (41) of an adjacent belt module (23, 26, 27, 29) such that the first and second link ends (41, 44) of the adjacent belt modules (23, 26, 27, 29) are intercalated and the adjacent belt modules (23, 26, 27, 29) are interlinked into adjacent hinged rows capable of following a curved path;
**characterized in that** it has a pitch of ≥ 38.1 mm and the cross-rib (38) has a stiffening web (47) disposed adjacent to the corrugated portion (50) and extending in the direction of belt travel with a constant width such that, when the belt (20) is at its maximum extension in the direction of belt travel, a space (200) bounded by the web (47) and the sidewalls (110, 113) of second link ends (44) of one belt module (23, 26, 27, 29) and an outer end (104) of a first link end (41) of an adjacent belt module (23, 26, 27, 29) has a diameter less than 10 mm.

2. Radius conveyor belt (20) according to Claim 1,
wherein the first and second link ends (41, 44) each have a leg portion (59, 68) with substantially parallel sidewalls (110, 113).

3. Radius conveyor belt (20) according to Claim 2,
wherein the first and second link ends (41, 44) each have a head portion (65, 74) that is wider than the leg portion (59, 68), the head portion (65, 74) having a pair of substantially parallel sidewalls (98, 101) and an endwall (104).

4. Radius conveyor belt (20) according to Claim 3,
wherein a junction of the sidewalls (98, 101) and endwall (104) of the head portion (65, 74) is rounded.

5. Radius conveyor belt (20) according to Claim 3 or 4,
wherein the endwall (104) of the head portion (65, 74) is rounded and connects a top surface of the link end (41, 44) to a bottom surface of the link end (41, 44).

6. Radius conveyor belt (20) according to anyone of Claims 1 to 5, further comprising an opening disposed through the belt module (23, 26, 27, 29) from the top surface to the bottom surface.

7. Radius conveyor belt (20) according to anyone of Claims 1 to 6, wherein the web (47) and the corrugated portion (50) form a multilevel surface defining the end of the space (107) between adjacent link ends (41, 44).

8. Conveying system, comprising:
an endless radius conveyor belt (20), comprising a plurality of belt modules (23, 26, 27, 29) having a plurality of first link ends (41) disposed in the direction of belt travel and having a plurality of second link ends (44) disposed in the opposite direction, the first and second link ends (41, 44) disposed such that a space (107) capable of receiving a link end (41, 44) is formed between adjacent link ends (41, 44), the space (107) being open at one end and terminating in a rounded region at the opposite end, the plurality of first link ends (41) being offset from the plurality of second link ends (44) such that the first link ends (41) align with the space (107) between the second link ends (44) such that adjacently positioned belt modules (23, 26, 27, 29) are capable of intercalating so that the first link ends (41) of one belt module (23, 26, 27, 29) fit into the spaces (107) defined between the second link ends (44) of an adjacent belt module (23, 26, 27, 29), the plurality of first link ends (41) having a slot (134) defined therein, the slot (134) disposed transverse to the direction of belt travel and extending in the direction of belt travel, the plurality of second link ends (44) having a transverse opening (137) defined therein;
an intermediate portion disposed between the first and second link ends (41, 44) and having a corrugated portion (50); a pivot rod (35) extending transverse to the direction of belt travel through the openings (137) in the second link ends (44) of one of the plurality of belt modules (23, 26, 27, 29) and extending through the slotted openings (134) in the first link ends (41) of an adjacent belt module (23, 26, 27, 29) such that the first and second link ends (41, 44) of the adjacent belt modules (23, 26, 27, 29) are intercalated and the adjacent belt modules (23, 26, 27, 29) are interlinked into adjacent hinged rows capable of following a curved path; and,
a drive sprocket (149) having teeth (148) disposed around the perimeter thereof, the teeth (148) capable of engaging with the rounded endwall (104) of the link ends (41, 44) to drive the endless conveyor belt (20) around a conveying path;
**characterized in that** the radius conveyor belt (20) has a pitch of ≥ 38.1 mm and the intermediate portion has a stiffening web (47) formed in the center of the belt module (23, 26, 27, 29) and disposed such that a first side of the web (47) terminates in a first surface (77) of the belt module (23, 26, 27, 29) and a second side of the web (47) terminates adjacent to the corrugated portion (50), wherein the web (47) and the corrugated portion (50) form a multilevel surface defining the end of the space (107) between adjacent link ends (41, 44), and wherein the web (47) on the intermediate portion extends in the direction of belt travel with a constant width such that, when the belt (20) is at its maximum extension in the direction of belt travel, a space (200) bounded by the web (47) and the sidewalls (110, 113) of second links ends (44) of one belt module (23, 26, 27, 29) and an outer end (104) of a first link end (41) of an adjacent belt module (23, 26, 27, 29) has a diameter less than 10 mm.

9. Conveying system according to Claim 8, wherein the first and second link ends (41, 44) each have a leg portion (59, 68) with substantially parallel sidewalls (110, 113).

10. Conveying system according to Claim 9, wherein the first and second link ends (41, 44) each have a head portion (65, 74) that is wider than the leg portion (59, 68), the head portion (65, 74) having a pair of substantially parallel sidewalls (98, 101) and an endwall (104).

11. Conveying system according to Claim 10, wherein a junction of the sidewalls (98, 101) and endwall (104) of the head portion (65, 74) is rounded.

12. Conveying system according to Claim 10 or 11, wherein the endwall (104) of the head portion (65, 74) is rounded and connects a top surface of the link end (41, 44) to a bottom surface of the link end (41, 44).

13. Conveying system according to anyone of Claims 8 to 12, further comprising an opening disposed through the belt module (23, 26, 27, 29) from the top surface to the bottom surface.

14. Conveying system according to anyone of Claims 8 to 13, wherein the web (47) and rounded regions form a multilevel surface defining the end of the space (107) between adjacent link ends (41, 44).

## Patentansprüche

1. Kurvenförderband (20) umfassend:
eine Mehrzahl von Bandmodulen (23, 26, 27, 29), die eine Mehrzahl von in Richtung der Bandbewegung angeordneten ersten Verbindungsenden (41) und eine Mehrzahl von in der entgegengesetzten Richtung angeordneten zweiten Verbindungsenden (44) und eine zwischen den ersten und zweiten Verbindungsenden (41, 44) angeordnete Querrippe (38) mit einem gewellten Teil (50) aufweisen, wobei die ersten und zweiten Verbindungsenden (41, 44) so angeordnet sind, dass zwischen benachbarten Verbindungsenden (41, 44) ein Raum (107) gebildet wird, der zur Aufnahme eines Verbindungsendes (41, 44) befähigt ist, wobei der Raum (107) an einem Ende offen ist und am entgegengesetzten Ende in einer gerundeten Region endet, wobei die Mehrzahl von ersten Verbindungsenden (41) gegenüber der Mehrzahl von zweiten Enden (44) so versetzt ist, dass die ersten Verbindungsenden (41) auf die Räume (107) zwischen den zweiten Verbindungsenden (44) dergestalt ausgerichtet sind, dass benachbart angeordnete Bandmodule (23, 26, 27, 29) so ineinander greifen können, dass die ersten Verbindungsenden (41) des einen Bandmoduls (23, 26, 27, 29) in die zwischen den zweiten Verbindungsenden (44) eines benachbarten Bandmoduls (23, 26, 27, 29) definierten Räume (107) passen, wobei die Mehrzahl von ersten Verbindungsenden (41) einen darin ausgebildeten Schlitz (134) aufweisen, wobei dieser Schlitz (134) quer zur Richtung der Bandbewegung angeordnet ist und sich in Richtung der Bandbewegung erstreckt, und die Mehrzahl von zweiten Verbindungsenden (44) eine darin ausgebildete Queröffnung (137) aufweisen;
einen Drehstab (35), der sich quer zur Richtung der Bandbewegung durch die Öffnungen (137) in den zweiten Verbindungsenden (44) des einen Bandmoduls (23, 26, 27, 29) aus der Mehrzahl davon erstreckt, und sich durch die schlitzförmigen Öffnungen (134) in den ersten Verbindungsenden (41) eines benachbarten Bandmoduls (23, 26, 27, 29) erstreckt, so dass die ersten und zweiten Verbindungsenden (41, 44) der benachbarten Bandmodule (23, 26, 27, 29) ineinander greifen und die benachbarten Bandmodule (23, 26, 27, 29) miteinander zu benachbarten aneinandergelenkten Reihen verbunden sind, die einem kurvigen Weg folgen können;
**dadurch gekennzeichnet, dass** es eine Teilung von ≥ 38,1 mm hat und die Querrippe (38) einen versteifenden Steg (47) aufweist, der angrenzend an den gewellten Teil (50) angeordnet ist und sich in Richtung der Bandbewegung mit konstanter Breite erstreckt, so dass, wenn das Band (20) in seiner grössten Ausdehnung in Richtung der Bandbewegung ist, ein von dem Steg (47), den Seitenwänden (110, 113) der zweiten Verbindungsenden (44) des einen Bandmoduls (23, 26, 27, 29) und einem äusseren Ende (104) eines ersten Verbindungsendes (41) eines angrenzenden Bandmoduls (23, 26, 27, 29) begrenzter Raum (200) einen Durchmesser von weniger als 10 mm aufweist.

2. Kurvenförderband (20) nach Anspruch 1, wobei die ersten und zweiten Verbindungsenden (41, 44) je einen Schenkelteil (59, 68) mit im Wesentlichen parallelen Seitenwänden (110, 113) aufweisen.

3. Kurvenförderband (20) nach Anspruch 2, wobei die ersten und zweiten Verbindungsenden (41, 44) je einen Kopfteil (65, 74) aufweisen, der breiter ist als der Schenkelteil (59, 68), wobei der Kopfteil (65, 74) ein Paar von im Wesentlichen parallelen Seitenwänden (98, 101) und eine Endwand (104) aufweist.

4. Kurvenförderband (20) nach Anspruch 3, wobei eine Verbindung der Seitenwände (98, 101) und der Endwand (104) des Kopfteils (65, 74) abgerundet ist.

5. Kurvenförderband (20) nach Anspruch 3 oder 4, wobei die Endwand (104) des Kopfteils (65, 74) abgerundet ist und eine oberste Oberfläche des Verbindungsendes (41, 44) mit einer untersten Oberfläche des Verbindungsendes (41, 44) verbindet.

6. Kurvenförderband (20) nach einem der Ansprüche 1 bis 5, das im Weiteren eine Öffnung umfasst, die durch das Bandmodul (23, 26, 27, 29) von der oberen Oberfläche zu der unteren Oberfläche angelegt ist.

7. Kurvenförderband (20) nach einem der Ansprüche 1 bis 6, wobei der Steg (47) und der gewellte Teil (50) eine mehrstufige Oberfläche formen, die das Ende des Raumes (107) zwischen benachbarten Verbindungsenden (41, 44) definiert.

8. Fördersystem, umfassend:
ein endloses Kurvenförderband, umfassend eine Mehrzahl von Bandmodulen (23, 26, 27, 29), die eine Mehrzahl von in Richtung der Bandbewegung angeordneten ersten Verbindungsenden (41) und eine Mehrzahl von in der entgegengesetzten Richtung angeordneten zweiten Verbindungsenden (44) aufweisen, wobei die ersten und zweiten Verbindungsenden (41, 44) so angeordnet sind, dass zwischen benachbarten Verbindungsenden (41, 44) ein Raum (107) gebildet wird, der zur Aufnahme eines Verbindungsendes (41, 44) befähigt ist, wobei der Raum (107) an einem Ende offen ist und am entgegengesetzten Ende in einer abgerundeten Region endet, wobei die Mehrzahl von ersten Verbindungsenden (41) gegenüber der Mehrzahl von zweiten Enden (44) so versetzt ist, dass die ersten Verbindungsenden (41) auf die Räume (107) zwischen den zweiten Verbindungsenden (44) dergestalt ausgerichtet sind, dass benachbart angeordnete Bandmodule (23, 26, 27, 29) so ineinander greifen können, dass die ersten Verbindungsenden (41) des einen Bandmoduls (23, 26, 27, 29) in die zwischen den zweiten Verbindungsenden (44) eines benachbarten Bandmoduls (23, 26, 27, 29) definierten Räume (107) passen, wobei die Mehrzahl von ersten Verbindungsenden (41) einen darin ausgebildeten Schlitz (134) aufweisen, wobei dieser Schlitz (134) quer zur Richtung der Bandbewegung angeordnet ist und sich in Richtung der Bandbewegung erstreckt, und die Mehrzahl von zweiten Verbindungsenden (44) eine darin ausgebildete Queröffnung (137) aufweisen;
einen Zwischenabschnitt, der zwischen den ersten und zweiten Verbindungsenden (41, 44) angeordnet ist und einen gewellten Teil (50) aufweist;
einen Drehstab (35), der sich quer zur Richtung der Bandbewegung durch die Öffnungen (137) in den zweiten Verbindungsenden (44) des einen Bandmoduls (23, 26, 27, 29) aus der Mehrzahl davon erstreckt, und sich durch die schlitzförmigen Öffnungen (134) in den ersten Verbindungsenden (41) eines benachbarten Bandmoduls (23, 26, 27, 29) erstreckt, so dass die ersten und zweiten Verbindungsenden (41, 44) der benachbarten Bandmodule (23, 26, 27, 29) ineinander greifen und die benachbarten Bandmodule (23, 26, 27, 29) miteinander zu benachbarten aneinandergelenkten Reihen verbunden sind, die einem kurvigen Weg folgen können; und
ein Antriebszahnrad (149), das Zähne (148) aufweist, die um seinen Umfang herum angeordnet sind und an die gerundete Endwand (104) der Verbindungsenden (41, 44) angreifen können, um das endlose Förderband (20) auf einem Förderweg zu bewegen;
**dadurch gekennzeichnet, dass** das Kurvenförderband (20) eine Teilung von ≥ 38,1 mm hat und der Zwischenabschnitt einen versteifenden Steg (47) aufweist, der in der Mitte des Bandmoduls (23, 26, 27, 29) geformt ist und so angeordnet ist, dass eine erste Seite des Stegs (47) in einer ersten Oberfläche (77) des Bandmoduls (23, 26, 27, 29) endet und eine zweite Seite des Stegs (47) benachbart zu dem gewellten Teil (50) endet, wobei der Steg (47) und der gewellte Teil (50) eine mehrstufige Oberfläche formen, die das Ende des Raumes (107) zwischen benachbarten Verbindungsenden (41, 44) definiert, und wobei der Steg (47) sich auf dem Zwischenabschnitt in Richtung der Bandbewegung mit konstanter Breite erstreckt, so dass wenn das Band (20) in seiner grössten Ausdehnung in Richtung der Bandbewegung ist, ein von dem Steg (47), den Seitenwänden (110, 113) der zweiten Verbindungsenden (44) des einen Bandmoduls (23, 26, 27, 29) und einem äusseren Ende (104) eines ersten Verbindungsendes (41) eines angrenzenden Bandmoduls (23, 26, 27, 29) begrenzter Raum (200) einen Durchmesser von weniger als 10 mm aufweist.

9. Fördersystem nach Anspruch 8, wobei die ersten und zweiten Verbindungsenden (41, 44) je einen Schenkelteil (59, 68) mit im Wesentlichen parallelen Seitenwänden (110, 113) aufweisen.

10. Fördersystem nach Anspruch 9, wobei die ersten und zweiten Verbindungsenden (41, 44) je einen Kopfteil (65, 74) aufweisen, der breiter ist als der Schenkelteil (59, 68), wobei der Kopfteil (65, 74) ein Paar von im Wesentlichen parallelen Seitenwänden (98, 101) und eine Endwand (104) aufweist.

11. Fördersystem nach Anspruch 10, wobei eine Verbindung der Seitenwände (98, 101) und der Endwand (104) des Kopfteils (65, 74) abgerundet ist.

12. Fördersystem nach Anspruch 10 oder 11, wobei die Endwand (104) des Kopfteils (65, 74) abgerundet ist und eine oberste Oberfläche des Verbindungsendes (41, 44) mit einer untersten Oberfläche des Verbindungsendes (41, 44) verbindet.

13. Fördersystem nach einem der Ansprüche 8 bis 12, das im Weiteren eine Öffnung umfasst, die durch das Bandmodul (23, 26, 27, 29) von der oberen Oberfläche zu der unteren Oberfläche angelegt ist.

14. Fördersystem nach einem der Ansprüche 8 bis 13, wobei der Steg (47) und abgerundete Abschnitte eine mehrstufige Oberfläche formen, die das Ende des Raumes (107) zwischen benachbarten Verbindungsenden (41, 44) definiert.

## Revendications

1. Bande transporteuse radiale (20), comprenant :
une pluralité de modules de bande (23, 26, 27, 29) comportant une pluralité de premières extrémités de liaison (41) disposées dans la direction de déplacement de la bande et une pluralité de deuxièmes extrémités de liaison (44) disposées dans la direction opposée, une nervure transversale (38) étant disposées entre les premières et deuxièmes extrémités de liaison (41, 44) et comportant une portion ondulée (50), les premières et deuxièmes extrémités de liaison (41, 44) étant disposées de telle sorte qu'un espace (107) capable de recevoir une extrémité de liaison (41, 44) est ménagé entre des extrémités de liaison adjacentes (41, 44), l'espace (107) étant ouvert à une extrémité et se terminant par une région arrondie à l'extrémité opposée, la pluralité de premières extrémités de liaison (41) étant décalées de la pluralité de deuxièmes extrémités de liaison (44) de sorte que les premières extrémités de liaison (41) s'alignent avec les espaces (107) entre les deuxièmes extrémités de liaison (44) de sorte que des modules de bande positionnés de façon adjacente (23, 26, 27, 29) sont capables de s'intercaler de façon que les premières extrémités de liaison (41) d'un module de bande (23, 26, 27, 29) s'adaptent dans les espaces (107) définis entre les deuxièmes extrémités de liaison (44) d'un module de bande adjacent (23, 26, 27, 29), la pluralité de premières extrémités de liaison (41) comportant une fente (134) définie à l'intérieur, la fente (134) étant ménagée transversalement à la direction de déplacement de la bande et s'étendant dans la direction de déplacement de la bande, la pluralité de deuxièmes extrémités de liaison (44) comportant une ouverture transversale (137) définie à l'intérieur ;
une tige formant pivot (35) s'étendant transversalement la direction de déplacement de la bande à travers les ouvertures (137) dans les deuxièmes extrémités de liaison (44) d'un module parmi la pluralité de modules de bande (23, 26, 27, 29) et s'étendant à travers les ouvertures en fente (134) dans les premières extrémités de liaison (41) d'un module de bande adjacent (23, 26, 27, 29) de sorte que les premières et deuxièmes extrémités de liaison (41, 44) des modules de bande adjacents (23, 26, 27, 29) sont intercalées et les modules de bande adjacents (23, 26, 27, 29) sont reliés entre eux pour former des rangées adjacentes articulées capables de suivre un trajet incurvé ;
**caractérisé en ce qu'**il a un pas ≥ 38,1 mm et la nervure transversale (38) comporte une âme de raidissement (47) disposée à proximité de la portion ondulée (50) et s'étendant dans la direction du trajet de la bande avec une largeur constante de sorte que, lorsque la bande (20) est à son extension maximale dans la direction de trajet de la bande, un espace (200) limité par l'âme (47) et les parois latérales (110, 113) des deuxièmes extrémités de liaison (44) d'un module de bande (23, 26, 27, 29) et une extrémité extérieure (105) d'une première extrémité de liaison (41) d'un module de bande adjacent (23, 26, 27, 29) a un diamètre inférieur à 10 mm.

2. Bande transporteuse radiale (20) selon la revendication 1, dans laquelle les premières et deuxièmes extrémités de liaison (41, 44) comprend chacune une portion de pied (59, 68) comportant des parois latérales (110, 113) sensiblement parallèles.

3. Bande transporteuse radiale (20) selon la revendication 2, dans laquelle les premières et deuxièmes extrémités de liaison (41, 44) comportent chacune une portion de tête (65, 74) qui est plus large que la portion de pied (59, 68), la portion de tête (65, 74) comportant une paire de parois latérales (98, 101) sensiblement parallèles et une paroi d'extrémité (104).

4. Bande transporteuse radiale (20) selon la revendication 3, dans laquelle une jonction des parois latérales (98, 101) et la paroi d'extrémité (104) de la portion de tête (65, 74) est arrondie.

5. Bande transporteuse radiale (20) selon la revendication 3 ou 4, dans laquelle la paroi d'extrémité (104) de la portion de tête (65, 74) est arrondie et relie une surface supérieure de l'extrémité de liaison (41, 44) à une surface inférieure de l'extrémité de liaison (41, 44).

6. Bande transporteuse radiale (20) selon l'une quelconque des revendications 1 à 5, comprenant en outre une ouverture ménagée à travers le module de bande (23, 26, 27, 29) de la surface supérieure à la surface inférieure.

7. Bande transporteuse radiale (20) selon l'une quelconque des revendications 1 à 6, dans laquelle l'âme (47) et la portion ondulée (50) forment une surface multi-niveau définissant l'extrémité de l'espace (107) entre des extrémités de liaisons adjacentes (41, 44).

8. Système de transport comprenant :
une bande transporteuse radiale sans fin (20) comprenant une pluralité de modules de bande (23, 26, 27, 29) comportant une pluralité de premières extrémités de liaison (41) disposées dans la direction de déplacement de la bande et une pluralité de deuxièmes extrémités de liaison (44) disposées dans la direction opposée, les premières et deuxièmes extrémités de liaison (41, 44) étant disposées de telle sorte qu'un espace (107) capable de recevoir une extrémité de liaison (41, 44) est ménagé entre des extrémités de liaison adjacentes (41, 44), l'espace (107) étant ouvert à une extrémité et se terminant par une région arrondie à l'extrémité opposée, la pluralité de premières extrémités de liaison (41) étant décalées de la pluralité de deuxièmes extrémités de liaison (44) de sorte que les premières extrémités de liaison (41) s'alignent avec l'espace (107) entre les deuxièmes extrémités de liaison (44) de sorte que des modules de bande positionnés de façon adjacente (23, 26, 27, 29) sont capables de s'intercaler de façon que les premières extrémités de liaison (41) d'un module de bande (23, 26, 27, 29) s'adaptent dans les espaces (107) définis entre les deuxièmes extrémités de liaison (44) d'un module de bande adjacent (23, 26, 27, 29), la pluralité de premières extrémités de liaison (41) comportant une fente (134) définie à l'intérieur, la fente (134) étant ménagée transversalement à la direction de déplacement de la bande et s'étendant dans la direction de déplacement de la bande, la pluralité de deuxièmes extrémités de liaison (44) comportant une ouverture transversale (137) définie à l'intérieur ;
une portion intermédiaire disposée entre les premières et deuxièmes extrémités de liaison (41, 44) et comportant une portion ondulée (50) ;
une tige formant pivot (35) s'étendant transversalement à la direction de déplacement de la bande à travers les ouvertures (137) dans les deuxièmes extrémités de liaison (44) d'un module parmi la pluralité de modules de bande (23, 26, 27, 29) et s'étendant à travers les ouvertures en fentes (134) dans les premières extrémités de liaison (41) d'un module de bande adjacent (23, 26, 27, 29) de sorte que les premières et deuxièmes extrémités de liaison (41, 44) des modules de bande adjacents (23, 26, 27, 29) sont intercalés et les modules de bande adjacents (23, 26, 27, 29) sont reliés entre eux pour former des rangées adjacentes articulées capables de suivre un trajet incurvé ; et,
un pignon d'entraînement (149) comportant des dents (148) disposés autour du périmètre dudit pignon, les dents (148) étant capables de s'engager avec la paroi d'extrémité arrondie (104) des extrémités de liaison (41, 44) pour entraîner la bande transporteuse sans fin (20) le long d'un trajet de transport ;
**caractérisé en ce que** la bande transporteuse radiale (20) a pas ≥ 38,1 mm et la portion intermédiaire comporte une âme de raidissement (47)) formée au centre du module de bande (23, 26, 27, 29) et disposée de telle sorte qu'un premier côté de l'âme (47) se termine par une première surface (77) du module de bande (23, 26, 27, 29) et un deuxième côté de l'âme (47) se termine près de la portion ondulée (50), l'âme (47) et la portion ondulée (50) formant une surface multi-niveau définissant l'extrémité de l'espace (107) entre des extrémités de liaison adjacentes (41, 44), et l'âme (47) sur la portion intermédiaire s'étendant dans la direction du trajet de la bande avec une largeur constante de sorte que, lorsque la bande (20) est à son extension maximale dans la direction de déplacement de la bande, un espace (200) limité par l'âme (47) et les parois latérales (110, 113) de deuxièmes extrémités de liaison (44) d'un module de bande (23, 26, 27, 29) et une extrémité extérieure (104) d'une première extrémité de liaison (41) d'un module de bande adjacent (23, 26, 27, 29) a un diamètre inférieur à 10 mm.

9. Système de transport selon la revendication 8, dans lequel les premières et deuxièmes extrémités de liaison (41, 44) comportent chacune une portion de pied (59, 68) comprenant des parois latérales (110, 113) sensiblement parallèles.

10. Système de transport selon la revendication 9, dans lequel les premières et deuxièmes extrémités de liaison (41, 44) comportent chacune une portion de tête (65, 74) qui est plus large que la portion de pied (59, 68), la portion de tête (65, 74) comportant une paire de parois latérales (98, 101) sensiblement parallèles et une paroi d'extrémité (104).

11. Système de transport selon la revendication 10, dans lequel une jonction des parois latérales (98, 101) et la paroi d'extrémité (104) de la portion de tête (65, 74) est arrondie.

12. Système de transport selon la revendication 10 ou 11, dans lequel la paroi d'extrémité (104) de la portion de tête (65, 74) est arrondie et relie une surface supérieure de l'extrémité de liaison (41, 44) à une surface inférieure de l'extrémité de liaison (41, 44).

13. Système de transport selon l'une quelconque des revendications 8 à 12, comprenant en outre une ouverture ménagée à travers le module de bande (23, 26, 27, 29) de la surface supérieure à la surface inférieure.

14. Système de transport selon l'une quelconque des revendications 8 à 13, dans lequel l'âme (47) et des régions arrondies forment une surface multi-niveau définissant l'extrémité de l'espace (107) entre des extrémités de liaison adjacentes (41, 44).
